# EUROPEAN PATENT SPECIFICATION

(11) **EP 0 935 337 B1**
(45) Date of publication and mention of the grant of the patent: **31.03.2004**
(21) Application number: 99101851.6
(22) Date of filing: 28.01.1999
(51) Int. Cl.: H02P 7/00

(54) **Control device for a household electrical appliance, with a non-volatile memory easily reprogrammable from the outside**
Regelvorrichtung für ein elektrisches Haushaltsgerät mit einem von aussen einfach zu programmierenden nichtflüchtigen Speicher
Dispositif de commande pour un appareil électroménager avec une mémoire non volatile reprogrammable facilement de l'exterieur

(30) Priority: 04.02.1998 IT MI980209
(43) Date of publication of application: 11.08.1999
(73) Proprietor: WHIRLPOOL CORPORATION, Benton Harbor Michigan 49022 (US)
(72) Inventor: Chiriatti, Antonio c/o Whirlpool Europe s.r.l., 21025 Comerio (IT); Zambon, Giorgio c/o Whirlpool Europe s.r.l., 21025 Comerio (IT); Binda, Edoardo c/o Whirlpool Europe s.r.l., 21025 Comerio (IT)
(74) Representative: Guerci, Alessandro

(56) References cited:
- EP-A- 0 715 235
- US-A- 4 642 753
- US-A- 4 807 114
- US-A- 5 587 916
- US-A- 5 694 611
- PATENT ABSTRACTS OF JAPAN vol. 017, no. 581 (P-1631), 21 October 1993 (1993-10-21) -& JP 05 165980 A (SHARP CORP), 2 July 1993 (1993-07-02)
- PATENT ABSTRACTS OF JAPAN vol. 015, no. 202 (C-0834), 23 May 1991 (1991-05-23) -& JP 03 055096 A (SANYO ELECTRIC CO LTD), 8 March 1991 (1991-03-08)
- PATENT ABSTRACTS OF JAPAN vol. 018, no. 493 (E-1606), 14 September 1994 (1994-09-14) -& JP 06 165374 A (SHARP CORP), 10 June 1994 (1994-06-10)

## Description

This invention relates to a device in accordance with the preamble of claim 1.

Modern household electrical appliances are known to comprise control devices of microprocessor type provided with non-volatile memories in which data relative to the appliance operation are stored. These memories are non-volatile (for example EPROM, EEPROM or the like) in order to retain said data in their memory even when the appliance is not powered.

With particular but non-limiting reference to washing machines, dishwashers and the like, household electrical appliances are known in which the said non-volatile memories are of reprogrammable type, for example to enable the memory of the washing machine to be provided, even years after its construction, with a new wash cycle relative to fabrics of new design or to allow the metered use of a new type of detergent; or, more simply, to enable the washing machine, after its assembly, to be provided with particular operating programs depending on the type of appliance and the clientele for which it is intended (ie whether of low-cost or high-performance type).

Control devices of the aforesaid type for a motor, in particular for installation in a household electrical appliance, are also known in which the non-volatile memory (of EEPROM type) can be reprogrammed. One of these devices is described in EP-A-0 684 692.

These known devices enable the non-volatile memory to be reprogrammed by means of the microprocessor-type control device. This latter is programmed to allow access to the memory when it senses a particular logic input signal. On receiving this signal it allows the memory to be accessed and reprogrammed. These devices therefore require appropriate programming of the control unit (which is costly) and electrical powering of the entire device during the memory reprogramming (which can be a limitation for the device and/or for the reprogramming steps).

An object of this invention is to provide a device of the aforesaid type which is improved compared with already known equivalent devices.

A particular object of the invention is to provide a device of the aforesaid type which enables the data present in the non-volatile memory to be modified without the need for particular programming of the control unit and in which this modification can be made without electrically powering the entire device.

A further object is to provide a device of the aforesaid type which is simple to use and reprogrammable and it is of low cost.

These and further objects which will be apparent to an expert of the art are attained by a device in accordance with the accompanying claims.

The invention will be more apparent from the accompanying drawing, which is provided by way of non-limiting example and on which:

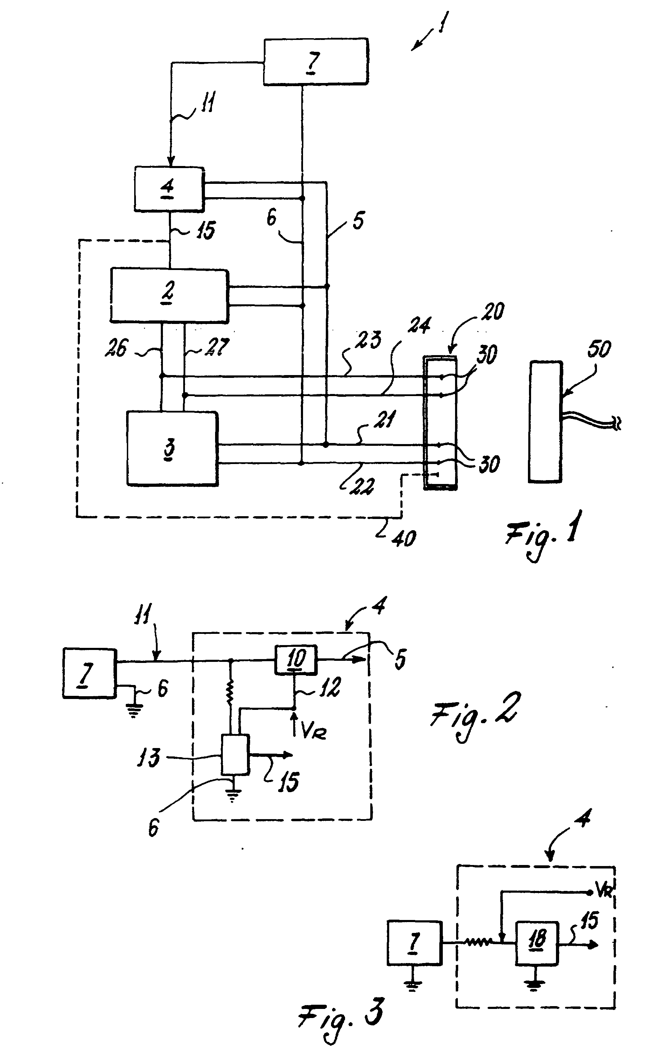

Figure 1 is a block diagram of the device relatively to the invention; and Figures 2 and 3 show two variants of a part of he device represented in Figure 1.

With reference to said figures, the device of the invention is indicated overall by 1 and comprises a usual microprocessor-type control unit 2 connected to a non-volatile memory, for example an EEPROM 3. The unit 2 is connected to a low voltage sensor and/or regulator circuit 4 usually used for resetting the microprocessor of the unit 2 in case this is powered at a voltage less than the usual operating voltage. During the reset operation, said unit 2 is momentarily deactivated and the devices connected to it are put on standby. The unit 2 is connected to electrical lines 5 and 6 leaving the sensor and/or regulator device 4. This latter is powered (line 11) by a power member 7 within the device (for example an electrical transformer), connected to an external electrical supply (not shown) and to the electrical line 6. The memory 3 and sensor 4 are also connected to the electrical lines 5 and 6 so as to also receive electrical power from the member 7.

In one embodiment, the low voltage sensor 4 comprises (see Figure 2) a voltage regulator 10 connected to the line 5, to which the unit 2 is connected, and to an electrical line 12 terminating in a voltage sensing circuit 13. A reference signal V_{R} reaches the line 12 in known manner, to allow proper operation of the sensor 4 (ie to enable this latter to evaluate the correct feed voltage to the unit 2). The circuit 13 is connected to earth and is also connected to a line 15 connected to the unit 2. Both the circuit 13 and the regulator 10 are connected to the power member 7.

In a known variant, the regulator 4 comprises a known member 18 acting both as the voltage regulator and as the voltage sensing circuit.

According to the invention, the EEPROM can be directly reprogrammed from outside the device 1, ie without reprogramming being effected via the unit 2 and without the device 1 being maintained under voltage (ie without the member 7 powering the various device components). For this purpose, the device 1 comprises a connection member or interface 20 accessible from outside the device 1. From this member there branch electrical feed lines 21 and 22 connected to the electrical lines 5 and 6, and data transfer lines 23 and 24 connected to electrical lines 26 and 27 connecting the unit 2 to the EEPROM 3. The lines 21, 22, 23 and 24 terminate in usual electrical connection members 30 present in the member 20. Alternatively, the lines 21 and 22 connect the member 20 only to the memory, whereas a further line 40 connects this member to the aforesaid line 15, the unit 2 being powered from the mains via the member 7.

It will be assumed that a device 1 already has its EEPROM 3 programmed, for example for a definite type of household electrical appliance, such as a washing machine, operating in accordance with particular algorithms already set in the device. It will now be assumed that the algorithm or operating program memorized in the EEPROM for this washing machine is to be modified (for example to increase its operating cycles). To achieve this modification, a suitable known device (not shown) containing the new algorithm (such as a portable computer or a microprocessor member with its memory containing the new algorithm)is connected to the member 20 via a connector 50 formed in such a manner as to cooperate with the connection members or contacts 30. via this connection, which is made with the device 1 not electrically powered, a low voltage electrical signal (for example of 3 volts) is fed along the electrical lines 21 and 22 and/or a logic signal is fed along the line 40 to power the EEPROM 3, simultaneously feeding said signal to the circuit or sensor 4. This electrical signal, which is less than the threshold voltage V_{R} of said sensor but is sufficient to ensure operation of the memory 3, sets the sensor 4 in the condition for resetting the unit 2. This condition lasts for the entire period during which this signal is fed along the lines 21 and 22 and/or 40. On doing this, ie virtually simultaneously with the feed of said low voltage signal to the sensor 4, the new operating algorithm is fed directly into the non-volatile memory 3 via the lines 23 and 24. This new algorithm consequently does not pass through the microprocessor unit 2.

On termination of this operation, the EEPROM 3 contains the new operating algorithm for the washing machine. The low voltage feed is then switched off and the connector 50 is separated from the member or interface 20. In this manner the unit 2, not yet powered by the mains, returns to its potentially active position and the appliance can be again used after its connection to the mains.

The aforesaid operations can be performed directly in the factory, either on constructing the device 1 or at the end of the appliance production line or at any moment during its use. In this manner a single device 1 (which is basically a card with integrated circuits) can be used on similar appliances but arranged to operate in a different manner (depending on the product range), with considerable industrial advantages.

Likewise, using specialized personnel, the said operations can be performed even with the appliance already installed and after years of use. This enables the use of the appliance to be adapted to new requirements which have arisen during the time in which it has been in operation.

To obtain easy access to the member or interface 20, this can be located in an easily accessible position, preferably on a usual control panel. This member can be either of the aforedescribed type or a different type. For example it can be an infrared receiver (in which case the connector 50 is replaced by a suitable infrared generator), a radio receiver or another type (with obvious modifications to the connector 50). These variants together with other equivalent solutions available to the average expert of the art, are to be considered as falling within the scope of the invention as defined in the following claims.

## Claims

1. A household electrical appliance control device (1), for a washing machine, dishwasher or the like, said device comprising a control unit (2) connected to a reprogrammable non-volatile memory (3), disabling means (21, 22, 40) accessible from outside the device to disable the control unit (2), and reprogramming means (23, 24) allowing direct reprogramming of the memory (3), **characterised in that** said means (21, 22, 40, 23, 24) are connected to said memory to electrically power this latter, and are connected to the control unit (2) to allow a signal to be fed to it to disable it at least before reprogramming the memory.

2. A device as claimed in claim 1, **characterised in that** the disabling means are power supply means (21, 22) which power the memory (3) and the control unit (2), this latter being powered via a low voltage sensing circuit (4).

3. A device as claimed in claim 1, **characterised in that** the disabling means are an electrical line (40) arranged to receive a disabling signal and connected to the control unit (2), the memory being electrically powered via specific electrical lines (21, 22) provided for this purpose, and being connected to the reprogramming means (23, 24).

4. A device as claimed in claim 3, **characterised in that** the control unit (2) is electrically powered by the mains, via a power member (7) and a low voltage sensing circuit (4).

5. A device as claimed in claim 1, **characterised in that** the disabling means (21, 22, 40) and the reprogramming means (23, 24) extend from an interface (20) provided in a position easily accessible from outside the household electrical appliance.

6. A device as claimed in claim 3, **characterised in that** the electrical line (40) arranged to receive the disabling signal is connected to the interface (20).

7. A device as claimed in claim 2, **characterised in that** the interface (20) comprises a mechanical connection member (20) arranged to cooperate with an external connector of a device for reprogramming the non-volatile memory (3).

8. A device as claimed in claim 2, **characterised in that** the interface (20) comprises means for receiving an electromagnetic signal remotely generated by corresponding counter-means associated with the device for reprogramming the non-volatile memory (3).

## Patentansprüche

1. Steuervorrichtung (1) für eine elektrische Haushaltsmaschine, eine Waschmaschine, einen Geschirrspüler oder dergleichen mit einer Steuereinheit (2), die mit einem nichtflüchtigen Speicher (3) verbunden ist, mit Sperrmitteln (21, 22 40) , die von der Außenseite der Steuervorrichtung zur Sperrung der Steuereinheit (2) zugänglich sind, und mit Wiederprogrammierungsmitteln (23, 24) für die direkte Wiederprogrammierung des Speichers (3),
**dadurch gekennzeichnet,**
**dass** die Sperrmittel (21, 22, 40, 23, 24) mit dem genannten Speicher (3) zur Versorgung dieses Speichers mit Strom und mit der Steuereinheit (2) zur Einspeisung eines Signals in diese Steuereinheit verbunden sind, wobei das Signal diese Steuereinheit vor der Eingabe eines neuen Programms sperrt.

2. Steuervorrichtung nach Anspruch 1,
**dadurch gekennzeichnet,**
**dass** die Sperrmittel Stromversorgungsmittel (21, 22) sind, die den Speicher (3) und die Steuereinheit (2) mit Strom versorgen, wobei die Steuereinheit über eine Niederspannungsmessschaltung (4) gespeist wird.

3. Steuervorrichtung nach Anspruch 1,
**dadurch gekennzeichnet,**
**dass** die Sperrmittel eine elektrische Leitung (40) sind, die derart angeordnet ist,
**dass** sie ein Sperrsignal empfängt, und die mit der Steuereinheit (2) verbunden ist, wobei der Speicher (3) über besondere, für diesen Zweck vorgesehene, elektrische Leitungen (21, 22) mit Strom versorgt wird und mit den Wiederprogrammierungsmitteln (23, 24) verbunden ist.

4. Steuervorrichtung nach Anspruch 3,
**dadurch gekennzeichnet,**
**dass** die Steuereinheit (2) vom Stromnetz über ein Stromversorgungsglied (7) und eine Niederspannungsmessschaltung (4) elektrisch gespeist wird.

5. Steuervorrichtung nach Anspruch 1,
**dadurch gekennzeichnet,**
**dass** die Sperrmittel (21, 22, 40) und die Wiederprogrammierungsmittel (23, 24) von einem Schnittstellenglied (20) ausgehen, das in einer von der Außenseite des elektrischen Haushaltsgeräts leicht zugänglichen Position angeordnet ist.

6. Steuervorrichtung nach Anspruch 3,
**dadurch gekennzeichnet,**
**dass** die elektrische Leitung (40), die derart angeordnet ist, dass sie das Sperrsignal empfängt, mit dem Schnittstellenglied (20) verbunden ist.

7. Steuervorrichtung nach Anspruch 2,
**dadurch gekennzeichnet,**
**dass** das Schnittstellenglied (20) ein mechanisches Steckglied (20) aufweist, das derart ausgebildet ist, dass es mit einem externen Steckverbinder (50) einer Vorrichtung zur Wiederprogrammierung des nichtflüchtigen Speichers (3) zusammenwirkt.

8. Steuervorrichtung nach Anspruch 2,
**dadurch gekennzeichnet,**
**dass** das Schnittstellenglied (20) Mittel zum Empfang eines elektromagnetischen Signals aufweist, das mittels entsprechender Gegenmittel fernerzeugt wird, die mit der Vorrichtung zur Wiederprogrammierung des nichtflüchtigen Speichers (3) verbunden sind.

## Revendications

1. Dispositif de commande (1) pour un appareil électroménager, pour un lave-linge, un lave-vaisselle ou analogue, ledit dispositif comprenant une unité de commande (2) connectée à une mémoire non volatile reprogrammable (3), des moyens d'invalidation (21,22,40) accessibles de l'extérieur du dispositif pour invalider l'unité de commande (2), et des moyens de reprogrammation (23,24) permettant une reprogrammation directe de l'unité de mémoire (3), **caractérisé en ce que** lesdits moyens (21,22, 40,23,24) sont connectés à ladite mémoire pour l'alimentation électrique de cette dernière et sont connectés à l'unité de commande (2) pour permettre l'envoi d'un signal à ces moyens pour les invalider au moins avant une reprogrammation de la mémoire.

2. Dispositif selon la revendication 1, **caractérisé en ce que** les moyens d'invalidation sont des moyens d'alimentation en énergie (21,22), qui alimentent la mémoire (3) et l'unité de commande (2), cette dernière étant alimentée par l'intermédiaire d'un circuit de détection de basse tension (4).

3. Dispositif selon la revendication 1, **caractérisé en ce que** les moyens d'invalidation sont une ligne électrique (40) agencée de manière à recevoir un signal d'invalidation et raccordée à l'unité de commande (2), la mémoire étant alimentée électriquement au moyen de lignes électriques spécifiques (21,22) prévues à cet effet, et étant connectée aux moyens de reprogrammation (23,24).

4. Dispositif selon la revendication 3, **caractérisé en ce que** l'unité de commande (2) est alimentée électriquement par le réseau, par l'intermédiaire d'un élément de transmission de puissance (7) et d'un circuit de détection de faible tension (4).

5. Dispositif selon la revendication 1, **caractérisé en ce que** les moyens d'invalidation (21,22,40) et les moyens de reprogrammation (23,24) s'étendent depuis une interface (20) prévue dans une position aisément accessible à partir de l'extérieur de l'appareil électroménager.

6. Dispositif selon la revendication 3, **caractérisé en ce que** la ligne électrique (1) agencée de manière à recevoir le signal de validation est connectée à l'interface (20).

7. Dispositif selon la revendication 2, **caractérisé en ce que** l'interface (20) comprend un élément de raccordement mécanique (20) agencé de manière à coopérer avec un connecteur extérieur d'un dispositif pour la reprogrammation de la mémoire non volatile (3).

8. Dispositif selon la revendication 2, **caractérisé en ce que** l'interface (20) comprend des moyens pour recevoir un signal électromagnétique produit à distance par des moyens antagonistes correspondants associés au dispositif pour la reprogrammation de la mémoire non volatile (3).
